# EUROPÄISCHE PATENTSCHRIFT

(11) **EP 1 328 333 B1**
(45) Veröffentlichungstag und Bekanntmachung des Hinweises auf die Patenterteilung: **08.12.2004**
(21) Anmeldenummer: 01985238.3
(22) Anmeldetag: 24.09.2001
(51) Int. Cl.: B01D 53/94, F01N 3/20

(54) **VERFAHREN UND VORRICHTUNG ZUR DOSIERUNG EINES REDUKTIONSMITTELS ZUR ENTFERNUNG VON STICKOXIDEN AUS ABGASEN**
METHOD AND DEVICE FOR DOSING A REDUCING AGENT FOR THE REMOVAL OF NITROGEN OXIDES FROM EXHAUST GASES
PROCEDE ET DISPOSITIF DE DOSAGE D'UN AGENT DE REDUCTION POUR L'ELIMINATION D'OXYDES D'AZOTE CONTENUS DANS DES GAZ D'ECHAPPEMENT

(30) Priorität: 22.09.2000 DE 10047519
(43) Veröffentlichungstag der Anmeldung: 23.07.2003
(73) Patentinhaber: ROBERT BOSCH GMBH, 70442 Stuttgart (DE)
(72) Erfinder: HUBER, Sven, 83404 Ainring-Mitterfelden (DE); MAYER, Hanspeter, A-2753 Markt Piesting (AT); MUELLER, Gerhard, 83395 Freilassing (DE); OFFENHUBER, Michael, A-5421 Adnet (AT)
(86) Internationale Anmeldenummer: PCT/DE2001/003664
(87) Internationale Veröffentlichungsnummer: WO 2002/024312

(56) Entgegenhaltungen:
- US-A- 5 367 875
- US-A- 6 063 350
- US-A- 6 119 448

## Beschreibung

### Stand der Technik

Die Erfindung geht aus von einem Verfahren beziehungsweise einer Vorrichtung zur Dosierung eines Reduktionsmittels, insbesondere eines Harnstoffs bzw. einer Harnstoff-Wasser-Lösung im Rahmen einer katalytischen Abgasnachbehandlung, nach der Gattung der unabhängigen Ansprüche.

Um eine Verminderung von NO_{X}-Bestandteilen in Abgasen zu erzielen, wurden insbesondere für Dieselmotoren Reduktionskatalysatoren entwickelt, die üblicherweise in sogenannte SCR-Katalysatoren (engl. "Selective Catalytic Reduction") und Speicherkatalysatoren unterteilt werden. Die sogenannten SCR-Katalysatoren werden mittels einer Harnstoff- und/oder Ammoniakreduktionsmittelzufuhr regeneriert, während die sogenannten Speicherkatalysatoren mit Kohlenwasserstoffen des mitgeführten Brennkraftmaschinen-Brennstoffs in sogenannten Abgasfettphasen regeneriert werden.

Aus der deutschen Patentanmeldung mit dem Aktenzeichen 199 46 900.8 ist eine Einrichtung bekannt, welche zum Entfernen von Stickoxiden in Abgasen beispielsweise aus einem Dieselmotor Harnstoff als Reduktionsmittel zudosiert. Die Dosierung erfolgt über ein Ventil, das Harnstoffdosen freigibt, die über die elektrische Ansteuerung des Dosierventils, dessen Drosselquerschnitt und den am Drosselventil anliegenden Druckunterschied bestimmt werden. Der vor dem Ventil anliegende Druck wird gemessen und innerhalb eines Toleranzbereichs konstant gehalten.

Aus der US 5 367 875 ist bereits bekannt, das Volumen des in den Abgasreaktor eingespritzten Ammoniaks über ein entsprechendes Ventil einzustellen.

### Vorteile der Erfindung

Das erfindungsgemäße Verfahren beziehungsweise die erfindungsgemäße Dosiervorrichtung mit den kennzeichnenden Merkmalen der unabhängigen Ansprüche. haben demgegenüber den Vorteil, die Dosiertoleranzen auf Werte von unterhalb +/-10%, beispielsweise auf Werte von ca. +/- 5 % zu senken. Serienstreuungen insbesondere des Drosselquerschnitts aufgrund von Fertigungstoleranzen des Bohrungsdurchmessers sowie der Ein- und Ausströmkanten können kompensiert werden, ebenso Temperaturabhängigkeiten in der Dosiermenge beispielsweise in einem Temperaturbereich von -10 bis +100°C, die durch die temperaturabhängige Viskosität der Flüssigkeit oder durch die Längenänderung der Bauteile aufgrund von Temperaturänderungen bedingt sind. Auch Zeitdriften über die gesamte Lebensdauer der Dosiervorrichtung (bis zu über 10000 Betriebsstunden) können kompensiert werden. Mit Hilfe der Massenbestimmung wird es möglich, einen geschlossenen Regelkreis beziehungsweise ein geschlossenes Regelkreisverfahren, ausgehend von der Dosierung über eine Detektierung des Dosiermassestroms, einer Erfassung der Meßwerte durch das Steuergerät bis zu einer korrigierten Ansteuerung des Dosierventils oder einer Dosierpumpe bereitzustellen. Somit besteht die Möglichkeit zur Korrektur der Ist-Werte beim Massenfluß mit dem Zweck der Anpassung an Soll-Werte, wodurch die Dosiergenauigkeit verbessert wird. Darüber hinaus können zeitlich beeinflußte Veränderungen erfaßt und korrigiert werden. Die Dosiertoleranz ist dann lediglich von der Meßtoleranz des Massesensors beeinflußt, was eine erhebliche Reduzierung der toleranzbeeinflussenden Bauteilezahl bedeutet. Besonders vorteilhaft ist es hierbei daß ein an sich bekannter Massesensor verwendet wird, der neben dem Massestrom zusätzlich die Dichte des durchfließenden Mediums mißt, so dass der verwendete Betriebsstoff und auch der beziehungsweise die Aggregatzustände des Betriebsstoffs erkannt werden können. Auch Phasenänderungen des Reduktionsmittels können erkannt werden, beispielsweise die Bildung von Dampfblasen nach Entgasungszuständen, eine Eisbildung nach Gefrieren und eine Bildung von Luftblasen. Das Steuergerät kann entsprechend Entlüftungs- bzw. Heizvorgänge einleiten, und eine Rücklaufleitung zum Tank bzw. ein separates Entlüftungsventil kann entfallen.

Durch die in den abhängigen Ansprüchen aufgeführten Maßnahmen sind vorteilhafte Weiterbildungen und Verbesserungen der in den unabhängigen Ansprüchen angegebenen Verfahren beziehungsweise Dosiervorrichtung möglich. So wird es möglich, bei Verwendung einer wässrigen Harnstofflösung über die Dichte die Konzentration des Harnstoffs zu bestimmen. Änderungen der Konzentration können somit innerhalb bestimmter Grenzen durch eine geänderte Ansteuerung des Dosierventils kompensiert werden. Dadurch wird die Dosiergenauigkeit weiter verbessert, und es kann bei über das Toleranzmaß hinausgehenden Abweichungen von der normal vorgesehenen Konzentration eine Fehlermeldung über eine fakultativ mit dem Steuergerät verbundene Warnanzeige ausgelöst werden. Auch Applikationsfehler, beispielsweise die Verwendung falscher Betriebsstoffe, z. B. von Wasser ohne Harnstoffzusatz oder von Methanol oder Kraftstoff, können erkannt werden und diese Information zu Systemnotabschaltungen bzw. zu Fehlermeldungen genutzt werden.

Besonders einfach gestaltet sich die dosierte Reduktionsmittelzufuhr durch eine entsprechende elektrisch ansteuerbare Dosierpumpe, da eine Pumpeneinheit ohnehin zur Beförderung des Harnstoffs notwendig ist.

Weiterhin vorteilhaft ist es, ein elektrisch ansteuerbares Dosierventil vorzusehen, das über ein Steuergerät elektrisch angesteuert werden kann, wobei dieses entweder allein oder in Kombination mit einer entsprechenden Ansteuerung der Dosierpumpe eine massegeregelte Dosierung gewährleistet.

Weitere Vorteile ergeben sich durch die in den weiteren abhängigen Ansprüchen und in der Beschreibung genannten Merkmale.

### Zeichnung

Ausführungsbeispiele der Erfindung sind in der Zeichnung dargestellt und in der nachfolgenden Beschreibung näher erläutert. Es zeigen
Fig. 1 eine mit einem Wassertank, einem Harnstofftank und einer Katalysatoranordnung zusammengeschaltete Dosiervorrichtung und
Fig. 2 eine entsprechende Anordnung mit einer alternativen Dosiervorrichtung.

### Beschreibung der Ausführungsbeispiele

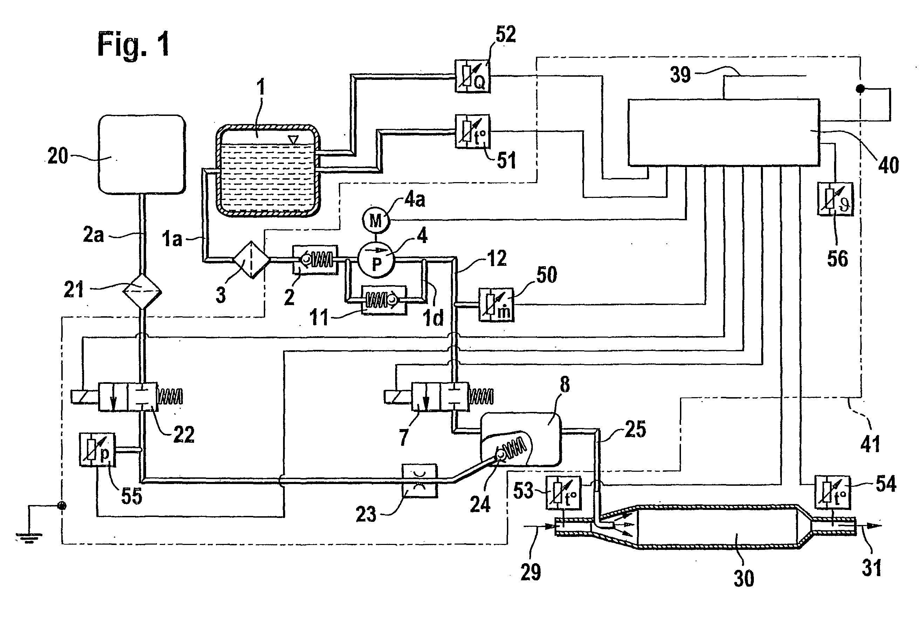

In Fig. 1 ist mit 1 ein Harnstofftank bezeichnet, aus welchem eine Harnstoff-Wasser-Lösung über eine Harnstoffleitung 1a mit Rückschlagventil 2 und einem als Filtersieb ausgeführtem Filter 3 von einer Dosierpumpe 4 angesaugt und zu einem Dosierventil 7 einer Mischkammer 8 gefördert wird. Die Pumpe 4 ist zur Minimierung der Überströmmenge über einen Steuermotor 4a drehzahlgesteuert. Eine geförderte Übermenge wird über ein Druckbegrenzungsventil 11 zur Saugseite der Pumpe zurückgeführt. Aus einem Druckluftbehälter 20 ist Druckluft über eine Druckluftleitung 2a mit einem Filtersieb 21, einem 2/2-Wegeventil 22, einer Drossel 23 und ein Rückschlagventil 24 in die Mischkammer einbringbar. Eine Aerosolleitung 25 führt von der Mischkammer 8 zum Katalysator 30, der auf der einen Seite eine Abgaszufuhr 29 und auf der gegenüberliegenden Seite einen Abgasauslaß 31 aufweist. Der Harnstofftank 1 ist mit einem Füllstandsensor 52 und einem Temperatursensor 51 versehen. Zwischen der Dosierpumpe 4 und dem Dosierventil 7 ist ein Massesensor 50 angeordnet. Temperatursensoren 53 und 54 messen die Temperatur des Abgases am Einlaß bzw. Auslaß des Katalysators 30. Ferner ist zwischen dem 2/2-Wegeventil 22 und der Drossel 23 ein Drucksensor 55 vorgesehen. Ein Temperatursensor 56 mißt die Temperatur eines metallischen Gehäuseblocks 41, auf dem die von der mit diesem Bezugszeichen versehenen strichmarkierten Linie umrandeten Komponenten angeordnet bzw. integriert sind. Auf dem Gehäuseblock 41 ist ferner ein Steuergerät 40 angebracht, das sowohl mit den Sensoren 50 bis 56 als auch mit dem Steuermotor 4a und dem Dosierventil 7 elektrisch verbunden ist. Der Gehäuseblock 41 ist geerdet, das Steuergerät 40 bezieht das elektrische Potential des Gehäuseblocks 41 als Referenzpotential. Über eine CAN-Datenleitung 39 (CAN ist eine Abkürzung für den englischen Ausdruck "Controlled Area Network") ist das Steuergerät 40 mit der Spannungsversorgung und weiteren elektronischen Komponenten im Kraftfahrzeug, insbesondere dem Motorsteuergerät, verbunden.

Das Dosierventil 7 dosiert die erforderliche Harnstoffwasserlösung in die Mischkammer 8 ein. In der Mischkammer wird unter Beaufschlagung der Harnstoffwasserlösung mittels der Druckluft ein Aerosol und ein Wandfilm erzeugt, welches bzw. welcher über die Aerosolleitung 25 in den Katalysator 30 eingebracht wird. Das Steuergerät 40 erfaßt hierbei Signale, die von einem übergeordneten Motorsteuergerät über die CAN-Datenleitung 39 empfangen werden, sowie die Signale von Druck-, Temperatur- bzw. Füllstandsensoren 51 bis 56, welche an sich bekannt sind und hier nicht weiter erläutert werden. Darüber hinaus empfängt das Steuergerät 40 ein elektrisches Signal vom Massesensor 50, aus dem sich der zeitabhängige Massendurchsatz am Reduktionsmittel zwischen der Dosierpumpe 4 und dem Dosierventil 7 ergibt. Das Steuergerät 40 berechnet aus den Sensorinformationen eine Harnstoffdosiermenge, welche einem den Katalysator 30 durchströmenden Abgas zugegeben werden soll. Der Massesensor 50 mißt unter Verwendung bekannter induktiver und/oder mechanischer Verfahren die Strömungsgeschwindigkeit des Reduktionsmittels über einen definierten Strömungsquerschnitt und generiert ein dem Massefluß proportionales elektrisches Signal. Das Steuergerät 40 regelt mit Hilfe des Dosierventils 7 und des Ventils 22 den Harnstoff-Wasser-Lösungsdruck bzw. den Druck in der Druckluftleitung. Das Steuergerät verwendet hierzu vom Motorsteuergerät über die Datenleitung 39 zugeführte Daten des Motorbetriebszustands sowie die aus der Dosierungsvorrichtung und dem Katalysator stammenden Sensordaten. Der Massesensor 50 erkennt die durchströmende Masse an Harnstoff-Wasser-Lösung und gibt den Meßwert ebenfalls an das Steuergerät weiter, so dass über einen geschlossenem Regelkreis der Ist-Massenstrom erfaßt und über die Ansteuerung des Dosierventils 7 mit dem Sollmassenstrom abgeglichen werden kann.

Alternativ kann die Dosiervorrichtung auch ohne Druckluftunterstützung verwendet werden, d. h. ohne Verwendung der Bauteile 20 bis 24. Der Massesensor kann auch so ausgebildet sein, dass er neben dem Massefluß auch die Dichte des durch die Meßzelle strömende Mediums bestimmt. Auch solche Massesensoren sind an sich bekannt. Bei der Verwendung einer wässrigen Harnstofflösung als fließendes Medium kann mit derartigen Meßelementen über die Dichte die Konzentration bestimmt werden. Änderungen der Konzentration können innerhalb bestimmter Grenzen durch geänderte Ansteuerung des Dosierventils kompensiert werden, indem entsprechende Konzentrations-Korrekturlinien im Steuergerät 40 abgespeichert sind. Dadurch wird die Dosiergenauigkeit weiter verbessert bzw. bei Konzentrationsunter- und - überschreitungen kann eine Fehlermeldung ausgelöst werden. Darüber hinaus kann das Steuergerät dann erkennen, wenn falsche Betriebsstoffe verwendet werden, und diese Information zu Systemnotabschaltungen und Fehlermeldungen nutzen. Informationen über die Dichte des Mediums können vom Steuergerät ferner dazu genutzt werden, um Phasenänderungen zu erkennen, wie beispielsweise Dampfblasen nach Entgasungszuständen, Eisbildung nach Gefrieren sowie Luft bei Luftblasenbildung. Entsprechend kann das Steuergerät Entlüftungs- und/oder Heizvorgänge einleiten. Entlüftungsvorgänge können über das Dosierventil 7 ausgeführt werden, ein Heizen über nicht näher dargestellte Heizelemente, die mit dem Gehäuseblock 41 in thermischem Kontakt stehen.

Alternativ zur Volumenstrommessung über einen definierten Strömungsquerschnitt kann auch ein kommerziell erhältlicher, nach dem Coriolis-Prinzip funktionierender Massesensor verwendet werden. Eine weitere Alternative besteht in der Ausführung als Waage ähnlich einer an sich bereits bekannten Kraftstoffwaage, die ein definiertes Volumen wiegt. Weiterhin ist es möglich, den Massesensor ähnlich einem Heissdraht-Luftmassensensor auszugestalten, der den Massenstrom über die durch die strömende Flüssigkeit induzierte Abkühlung eines erhitzten Drahtes bestimmt. Weiterhin kann unabhängig von der konkreten Ausgestaltung des Massesensors in ihm ein Temperatursensor integriert sein, der die Temperatur des Betriebsstoffes misst und dem Steuergerät mitteilt, so dass das Steuergerät einen Temperaturabgleich des Massenstromsensors durchführen kann, um die Temperaturabhängigkeit der kinematischen Viskosität der Flüssigkeit zu berücksichtigen.

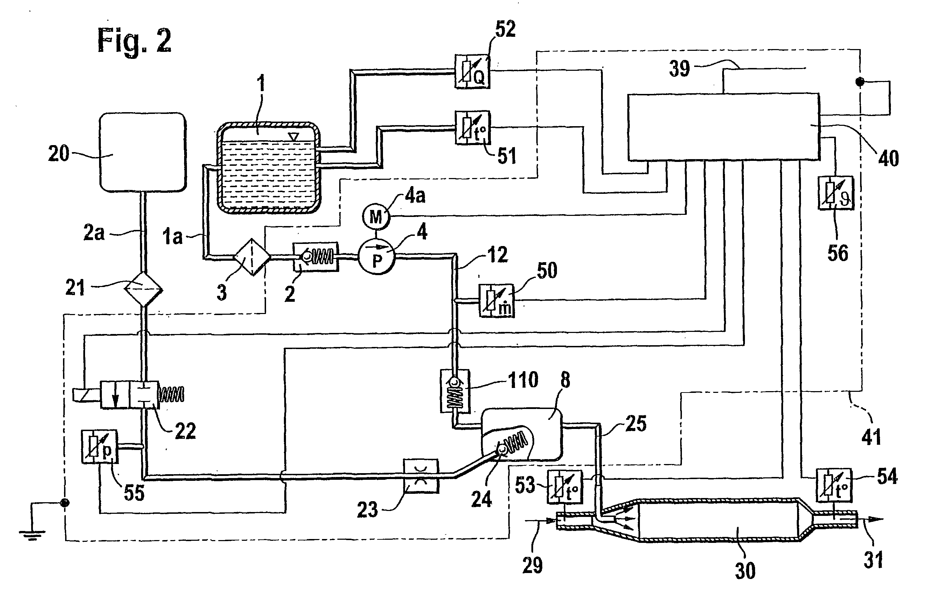

Fig. 2 zeigt eine weitere alternative Ausführungsform, bei der gleiche Bauteile wie in Fig. 1 mit gleichen Bezugszeichen versehen sind. Im Vergleich zu Fig. 1 entfällt das Druckbegrenzungsventil 11, und anstelle des Dosierventils 7 ist ein Rückschlagventil 110 angeordnet.

Hier handelt es sich im Vergleich zur Anordnung nach Fig. 1 um eine vereinfachte Ausführungsform, bei der die Dosierung lediglich mittels der Dosierpumpe erfolgt.

## Patentansprüche

1. Verfahren zur Dosierung eines Reduktionsmittels, insbesondere eines Harnstoffs beziehungsweise einer Harnstoff-Wasser-Lösung, bei denen das Reduktionsmittel einer Katalysatoranordnung (30) zur Entfernung von Stickoxiden aus den Abgasen insbesondere eines Dieselmotors zugeführt wird, **dadurch gekennzeichnet, dass** ein Massenstrom des Reduktionsmittels gemessen und das Reduktionsmittel in Abhängigkeit von der Größe des Massenstroms dosiert wird, wobei die Dichte des Reduktionsmittels vor dem Zuführen in die Katalysatoranordnung gemessen wird, aus der gemessenen Dichte der Aggregatzustand des Reduktionsmittels bestimmt beziehungsweise die Aggregatzustände des Reduktionsmittels bestimmt werden und bei Vorliegen gasförmiger oder fester Phasen das Reduktionsmittel entgast beziehungsweise aufgeheizt wird.

2. Verfahren nach Anspruch 1, **dadurch gekennzeichnet, daß** das Reduktionsmittel in Abhängigkeit von der gemessenen Dichte dosiert wird.

3. Verfahren nach Anspruch 1 oder 2, **dadurch gekennzeichnet, dass** eine Fehlermeldung oder eine Notabschaltung der Reduktionsmittelzufuhr durchgeführt wird, wenn die gemessene Dichte ausserhalb eines vorgegebenen Toleranzbereichs liegt.

4. Verfahren nach einem der Ansprüche 1 bis 3, **dadurch gekennzeichnet, dass** aus dem dosierten Reduktionsmittel ein Aerosol gebildet und anschließend das Aerosol in die Katalysatoranordnung (30) eingeführt wird.

5. Verfahren nach Anspruch 4, **dadurch gekennzeichnet, dass** zur Bildung des Aerosols dem Reduktionsmittel Luft dosiert zugeführt wird.

6. Verfahren nach einem der Ansprüche 1 bis 5, **dadurch gekennzeichnet, dass** der Massenstrom unter Ausnutzung des Corioliseffekts gemessen wird.

7. Verfahren nach einem der Ansprüche 1 bis 5, **dadurch gekennzeichnet, dass** der Massenstrom bestimmt wird, indem über einen definierten Strömungsquerschnitt die Strömungsgeschwindigkeit des Reduktionsmittels gemessen wird.

8. Verfahren nach einem der Ansprüche 1 bis 5, **dadurch gekennzeichnet, dass** der Massenstrom mittels einer Gewichtsmessung bestimmt wird.

9. Vorrichtung zur Dosierung eines Reduktionsmittels, insbesondere eines Harnstoffs beziehungsweise einer Harnstoff-Wasser-Lösung, mit Mitteln (2, 3, 4) zur Reduktionsmittelzufuhr in eine Katalysatoranordnung (30) zur Entfernung von Stickoxiden aus den Abgasen insbesondere eines Dieselmotors, **dadurch gekennzeichnet, dass** den Mitteln zur Reduktionsmittelzufuhr ein Massesensor (50) zur Messung des Reduktionsmittel-Massestroms in die Katalysatoranordnung (30) nachgeordnet ist, so dass über mindestens einen Aktuator (4, 4a; 7) eine massegeregelte Dosierung des Reduktionsmittels in Abhängigkeit eines elektrischen Signals des Massesensors erfolgen kann, wobei
der Massesensor neben der Messung des Massestroms auch eine Dichtemessung durchführen kann, so dass aus der gemessenen Dichte der Aggregatzustand des Reduktionsmittels bestimmt beziehungsweise die Aggregatzustäde des Reduktionsmittels bestimmt werden können und bei Vorliegen gasförmiger oder fester Phasen das Reduktionsmittel entgast beziehungsweise aufgeheizt werden kann.

10. Vorrichtung nach Anspruch 9, **dadurch gekennzeichnet, dass** die Mittel eine insbesondere elektrisch ansteuerbare (4a), als Aktuator zur massegeregelten Dosierung dienende Dosierpumpe (4) umfassen.

11. Vorrichtung nach Anspruch 9 oder 10, **dadurch gekennzeichnet, dass** dem Massesensor (50) ein elektrisch ansteuerbares Dosierventil (7) nachgeordnet ist.

12. Vorrichtung nach einem der Ansprüche 9 bis 11, **dadurch gekennzeichnet, dass** die dosierte Reduktionsmittelzufuhr in eine Mischkammer (8) zur Bildung eines Aerosols erfolgt, so dass über eine Aerosolleitung (25) das Aerosol in die Katalysatoranordnung (30) eingeführt werden kann.

13. Vorrichtung nach Anspruch 12, **dadurch gekennzeichnet, dass** Mittel (20, 21, 22, 23, 24, 55) zur dosierten Luftzufuhr in die Mischkammer (8) vorgesehen sind.

14. Vorrichtung nach einem der Ansprüche 9 bis 13, **dadurch gekennzeichnet, dass** der Massesensor nach dem Coriolisprinzip arbeitet.

15. Vorrichtung nach einem der Ansprüche 9 bis 13, **dadurch gekennzeichnet, dass** der Massesensor über einen definierten Strömungsquerschnitt die Strömungsgeschwindigkeit des Reduktionsmittels mißt.

16. Vorrichtung nach einem der Ansprüche 9 bis 13, **dadurch gekennzeichnet, dass** der Massesensor eine Gewichtsmessung durchführt.

17. Vorrichtung nach einem der Ansprüche 9 bis 16, **dadurch gekennzeichnet, dass** der Massesensor (50) an einem mit einer CAN-Datenleitung (39) verbindbaren Steuergerät (40) angeschlossen ist, so dass das Steuergerät den mindestens einen Aktuator (4, 4a; 7) unter Verwertung des elektrischen Signals ansteuern kann.

## Claims

1. Method for metering a reducing agent, in particular a urea or a urea-water solution, in which the reducing agent is fed to a catalytic converter arrangement (30) for removing nitrogen oxides from the exhaust gases from in particular a diesel engine, **characterized in that** a mass flow of the reducing agent is measured and the reducing agent is metered as a function of the level of the mass flow, the density of the reducing agent being measured before it is fed into the catalytic converter arrangement, the state of aggregation of the reducing agent or the states of aggregation of the reducing agent being determined from the measured density, and if gaseous or solid phases are present, the reducing agent is degassed or heated, respectively.

2. Method according to Claim 1, **characterized in that** the reducing agent is metered as a function of the measured density.

3. Method according to Claim 1 or 2, **characterized in that** a fault message is emitted or the supply of reducing agent undergoes an emergency shut-off if the measured density is outside a predetermined tolerance range.

4. Method according to one of Claims 1 to 3, **characterized in that** an aerosol is formed from the metered reducing agent, and the aerosol is then introduced into the catalytic converter arrangement (30).

5. Method according to Claim 4, **characterized in that** metered quantities of air are fed to the reducing agent in order to form the aerosol.

6. Method according to one of Claims 1 to 5, **characterized in that** the mass flow is measured using the Coriolis effect.

7. Method according to one of Claims 1 to 5, **characterized in that** the mass flow is determined by measuring the flow velocity of the reducing agent over a defined cross section of flow.

8. Method according to one of Claims 1 to 5, **characterized in that** the mass flow is determined by means of a weight measurement.

9. Device for metering a reducing agent, in particular a urea or a urea-water solution, having means (2, 3, 4) for feeding reducing agent into a catalytic converter arrangement (30) for removing nitrogen oxides from the exhaust gases from in particular a diesel engine, **characterized in that** a mass flow sensor (50) for measuring the mass flow of reducing agent into the catalytic converter arrangement (30) is arranged downstream of the means for supplying reducing agent, so that the metering of the reducing agent can be mass flow-regulated as a function of an electrical signal from the mass flow sensor via at least one actuator (4, 4a; 7), it being possible for the mass flow sensor to measure not only the mass flow but also the density, so that the state of aggregation of the reducing agent or the states of aggregation of the reducing agent can be determined from the measured density, and if gaseous or solid phases are present, the reducing agent can be degassed or heated, respectively.

10. Device according to Claim 9, **characterized in that** the means comprise in particular an electrically actuable (4a) metering pump (4) which serves as an actuator for the mass flow-regulated metering.

11. Device according to Claim 9 or 10, **characterized in that** an electrically actuable metering valve (7) is arranged downstream of the mass flow sensor (50).

12. Device according to one of Claims 9 to 11, **characterized in that** the metered supply of reducing agent is passed into a mixing chamber (8) in order to form an aerosol, so that the aerosol can be introduced into the catalytic converter arrangement (30) via an aerosol line (25).

13. Device according to Claim 12, **characterized in that** there are means (20, 21, 22, 23, 24, 55) for supplying a metered quantity of air into the mixing chamber (8).

14. Device according to one of Claims 9 to 13, **characterized in that** the mass flow sensor operates in accordance with the Coriolis principle.

15. Device according to one of Claims 9 to 13, **characterized in that** the mass flow sensor measures the flow rate of the reducing agent over a defined cross section of flow.

16. Device according to one of Claims 9 to 13, **characterized in that** the mass flow sensor carries out a weight measurement.

17. Device according to one of Claims 9 to 16, **characterized in that** the mass flow sensor (50) is connected to a control unit (40), which can for its part be connected to a CAN data line (39), so that the control unit can actuate the at least one actuator (4, 4a; 7) on the basis of the electrical signal.

## Revendications

1. Procédé de dosage d'un agent de réduction, en particulier d'urée ou d'une solution aqueuse d'urée, selon lequel l'agent de réduction est amené à un dispositif catalyseur (30) pour éliminer les oxydes d'azote des gaz d'échappement, en particulier d'un moteur diesel,
**caractérisé en ce que**
le débit massique de l'agent de réduction est mesuré et l'agent de réduction est dosé en fonction de l'importance du débit massique, en mesurant la densité de l'agent de réduction avant qu'il soit amené au dispositif catalyseur, en déterminant à partir de la densité mesurée l'état physique de l'agent de réduction ou bien les états physiques de l'agent de réduction, et en cas d'existence de phases gazeuses ou de phases solides, l'agent de réduction est dégazé ou chauffé.

2. Procédé selon la revendication 1,
**caractérisé en ce que**
l'agent de réduction est dosé en fonction de la densité mesurée.

3. Procédé selon la revendication 1 ou 2,
**caractérisé en ce qu'**
une signalisation de défaut ou un arrêt d'urgence de l'amenée de l'agent de réduction se produit si la densité mesurée se trouve en dehors d'une plage de tolérance prédéterminée.

4. Procédé selon l'une quelconque des revendications 1 à 3,
**caractérisé en ce qu'**
à partir de l'agent de réduction dosé un aérosol est formé et ensuite l'aérosol est introduit dans le dispositif catalyseur (30).

5. Procédé selon la revendication 4,
**caractérisé en ce que**
pour la formation de l'aérosol, de l'air est amené de manière dosée à l'agent de réduction.

6. Procédé selon l'une quelconque des revendications 1 à 5,
**caractérisé en ce que**
le débit massique est mesuré par utilisation de l'effet de Coriolis.

7. Procédé selon l'une quelconque des revendications 1 à 5,
**caractérisé en ce que**
le débit massique est déterminé en mesurant la vitesse d'écoulement de l'agent de réduction par l'intermédiaire d'une section d'écoulement déterminée.

8. Procédé selon l'une quelconque des revendications 1 à 5,
**caractérisé en ce que**
le débit massique est déterminé au moyen d'une mesure de poids.

9. Dispositif de dosage d'un agent de réduction, en particulier d'urée ou d'une solution aqueuse d'urée, avec des moyens (2, 3, 4) pour amener l'agent de réduction dans un dispositif catalyseur pour éliminer les oxydes d'azote des gaz d'échappement, en particulier d'un moteur diesel,
**caractérisé en ce qu'**
aux moyens pour amener l'agent de réduction est associé un capteur de masse (50) pour la mesure du débit massique de l'agent de réduction dans le dispositif catalyseur, de telle sorte que, par l'intermédiaire d'au moins un actionneur (4, 4a ; 7), il peut se produire un dosage, réglé par la masse, de l'agent de réduction en fonction d'un signal électrique du capteur de masse, dans lequel le capteur de masse, outre la mesure du débit massique, peut également effectuer une mesure de densité, de telle sorte qu'à partir de la densité mesurée, l'état physique de l'agent de réduction ou les états physiques de l'agent de réduction peuvent être déterminés et qu'en cas d'existence de phases gazeuses ou de phases solides, l'agent de réduction peut être dégazé ou chauffé.

10. Dispositif selon la revendication 9,
**caractérisé en ce que**
les moyens comprennent une pompe de dosage (4), pouvant en particulier être commandée électriquement (4a) et servant d'actionneur pour le dosage réglé par la masse.

11. Dispositif selon la revendication 9 ou 10,
**caractérisé en ce qu'**
au capteur de masse (50) est associée une vanne de dosage (7) pouvant être commandée électriquement.

12. Dispositif selon l'une quelconque des revendications 9 à 11,
**caractérisé en ce que**
l'amenée dosée de l'agent de réduction se fait dans une chambre de mélange (8) pour former un aérosol, de telle sorte que par l'intermédiaire d'une conduite d'aérosol (25) l'aérosol peut être introduit dans le dispositif catalyseur (30).

13. Dispositif selon la revendication 12,
**caractérisé en ce que**
des moyens (20, 21, 22, 23, 24, 55) sont prévus pour l'amenée d'air dosée dans la chambre de mélange (8).

14. Dispositif selon l'une quelconque des revendications 9 à 13,
**caractérisé en ce que**
le capteur de masse travaille suivant le principe de Coriolis.

15. Dispositif selon l'une quelconque des revendications 9 à 13,
**caractérisé en ce que**
le capteur de masse mesure la vitesse d'écoulement dans une section d'écoulement définie.

16. Dispositif selon l'une quelconque des revendications 9 à 13,
**caractérisé en ce que**
le capteur de masse effectue une mesure de poids.

17. Dispositif selon l'une quelconque des revendications 9 à 16,
**caractérisé en ce que**
le capteur de masse (50) est raccordé à un appareil de commande (40), qui peut être relié à une ligne de données CAN (39), de telle sorte que l'appareil de commande peut commander au moins un actionneur (4, 4a ; 7) en utilisant le signal électrique.
